(19) Europäisches Patentamt
European Patent Office
Office européen des brevets

(11) EP 4 804 188 A1

(12) EUROPEAN PATENT APPLICATION

(43) Date of publication:
**09.09.2026 Bulletin 2026/37**

(21) Application number: **25162098.5**

(22) Date of filing: **06.03.2025**

(51) International Patent Classification (IPC):
***G10L 25/03*** (2013.01) *G10L 25/48* (2013.01)
*G10L 25/90* (2013.01) *G10L 17/26* (2013.01)

(52) Cooperative Patent Classification (CPC):
**G10L 25/03;** G10L 17/26; G10L 25/48;
G10L 2025/906

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Österreichische Akademie der Wissenschaften 1010 Wien (AT)**
- **Veterinärmedizinische Universität Wien 1210 Vienna (AT)**
- **Nantes Université 44035 Nantes Cedex 1 (FR)**
- **Ecole Centrale De Nantes 44300 Nantes (FR)**
- **Centre National de la Recherche Scientifique 75016 Paris (FR)**

(72) Inventors:
- **Abbasi, Reyhaneh 2201 Gerasdorf bei Wien (AT)**
- **Holighaus, Nicki 2344 Maria Enzersdorf (AT)**
- **Balazs, Peter 3430 Tulln (AT)**
- **Lostanlen, Vincent 44300 Nantes (FR)**
- **Penn, Dustin J. 1210 Wien (AT)**
- **Zala, Sarah M. 1210 Wien (AT)**

(74) Representative: **Best, Bastian Bestpatent Konrad-Zuse-Platz 8 81829 München (DE)**

# (54) MULTICOMPONENT VOCALIZATION TRACKING

(57) A method is described for processing a vocalization signal, in particular an ultrasonic vocalization signal, which involves receiving the signal and performing harmonic component analysis to track a harmonic partial. The harmonic component analysis uses a multitapered reassigned constant-Q transform to analyze the signal, allowing for the identification of specific harmonic components within the signal.

FUNDAMENTAL FREQUENCY ANALYSIS 106
ULTRASONIC VOCALIZATION SIGNAL 102
DENOISING 104
COMPUTING MULTITAPERED REASSIGNED STFT 110
PATH OPTIMIZATION 112
FUNDAMENTAL FREQUENCY 118
COMPUTING MULTITAPERED REASSIGNED CQT 114
AUTOCORRELATION 116
HARMONIC PARTIAL 120
HARMONIC COMPONENT ANALYSIS 108

FIG. 1



Processed by Luminess, 75001 PARIS (FR)

## Description

## TECHNICAL FIELD

This disclosure relates generally to the field of audio signal processing, and more specifically to the detection and tracking of vocalizations, such as ultrasonic vocalizations, in audio signals. One exemplary application is the detection and tracking of ultrasonic vocalizations of house mice or other rodents.

## BACKGROUND

Ultrasonic vocalization (USV) tracking has gained significant attention due to its potential applications in understanding animal communication, for example of rodents such as mice. USVs are surprisingly complex and can provide insights into the emotional and social interaction of mice by examining the diversity of vocalizations and the sequences in which they occur. USV studies have also been used as a model system to investigate the genetic basis of communication and disease phenotypes, including human speech, autism and other neuropsychiatric disorders.

Practitioners have categorized USVs into various classes through visual inspection of spectrograms. Others have proposed statistical classification methods such as DeepSqueak and BootSnap. DeepSqueak, a framework for detection and analysis of USVs based on deep learning, uses a ridge detector based on identifying local amplitude maxima in the time-frequency domain. Yet other works propose the detection of USV ridges via thresholding smoothed spectrograms.

Both manual and automatic classifications typically rely on spectro-temporal features such as duration, frequency (slope) and complexity. Many of those features are derived from ridges, i.e., the local maxima in the time-frequency domain. Despite the value of ridges in USV classification, the prevalence of low signal-to-noise ratio (SNR) in USV recordings poses a significant challenge for their extraction. Furthermore, current methods for USV ridge extraction typically only track the fundamental frequency ridge, which limits their applicability in more complex environments.

Therefore, the limitations of current methods become apparent when faced with noisy or complex acoustic environments. It is thus an objective of the present disclosure to provide a technique for accurately tracking ultrasonic vocalizations that overcomes the above limitations at least in part, offering improved precision and robustness to noise.

## SUMMARY OF THE DISCLOSURE

The above and other objectives may be achieved by the subject-matter defined by the independent claims. Advantageous modifications of embodiments of the present disclosure are defined in the dependent claims as well as in the description and the drawings.

One aspect relates to a method of processing vocalization signals, in particular ultrasonic vocalization signals. The term "Ultrasonic vocalization signal" may be understood as an audio signal which comprises one or more ultrasonic vocalizations (USVs). USVs typically occur above the frequency range of human hearing, typically above 20 kHz such as at frequencies ranging from approximately 20-120 kHz. USVs may be emitted by subjects or animals such as bats and rodents, and have been extensively studied in rats and mice. While USVs are inaudible to humans, USV signals can be detected and analyzed by audio processing techniques and equipment. The more generic case of a "Vocalization signal" may be understood as an audio signal which comprises one or more vocalizations, wherein "Vocalization" refers to sound production mechanisms and acoustic signals generated by biological organisms.

It may be provided that the method comprises receiving a vocalization signal, in particular an ultrasonic vocalization signal. Throughout the present disclosure, whenever the more specific case of an ultrasonic vocalization and, respectively, an ultrasonic vocalization signal, are mentioned, it will be appreciated that the underlying concepts may as well be applies to any type of vocalization and vocalization signal. The ultrasonic vocalization signal may be received from a sensor, such as an audio recording device, which is configured to record ultrasonic vocalization signals.

It may be provided that the method comprises performing harmonic component analysis to track a harmonic partial (or one or more harmonic partials) of the ultrasonic vocalization signal. The term "Harmonic partial" may be better understood in the context of a multicomponent audio signal which is formed by a combination of periodic waves (typically sine waves) or "partials", each with its own frequency of vibration, amplitude, and phase. A "partial" is any of the sine waves of which a complex tone is composed, not necessarily with an integer multiple of the lowest harmonic. A "harmonic" is any member of the harmonic series, an ideal set of frequencies that are positive integer multiples of a common fundamental frequency. A "harmonic partial" is any real partial component of a complex tone that matches (or nearly matches) an ideal harmonic, though it may not be continuously present throughout the duration of the fundamental frequency.

By tracking a harmonic partial of the ultrasonic vocalization signal, in particular the first harmonic partial, the ultrasonic vocalization signal analysis is greatly enhanced, in particular in the context of analyzing animal behavior. Harmonic components in USVs present a particular challenge for automatic classification, especially during sexual and

social interactions when high levels of background noise and competing sounds, such as female broadband vocalizations, are present. In contrast to known techniques, which usually neglect partial harmonic frequencies entirely, the method according to the above aspects facilitates the correct classification of USVs of harmonic type.

It may be provided that the harmonic component analysis comprises computing a constant-Q transform. The term "Constant-Q transform" (CQT) may be understood as a time-frequency representation in which frequency follows a geometric progression. The common factor of the geometric progression is typically $2^{1/Q}$, wherein $Q$ is the number of filters per octave. CQT typically represents the spectrum of a signal with bandpass filters with geometrically spaced center frequencies and constant center-frequency-to-bandwidth ratio (Q-factor). This is in contrast, e.g., to any transform based on the Fourier transform which has a frequency axis that is linearly spaced in Hz. The Constant-Q transform is particularly useful for analyzing musical signals and other types of audio signals where the frequency resolution is more important than time resolution. It is also beneficial for analyzing signals with a wide range of frequencies, such as ultrasonic vocalizations in rodents. Technological background about CQT can be found in J. C. Brown, "Calculation of a constant q spectral transform," The Journal of the Acoustical Society of America, vol. 89, no. 1, pp. 425-434, 1991., the contents of which are incorporated herein by reference.

It may be provided that the harmonic component analysis comprises computing a reassigned constant-Q transform. The term "Reassignment" may be understood as a technique for sharpening a time-frequency representation by mapping the data to time-frequency coordinates that are nearer to estimates of the true local instantaneous frequency and time of the analyzed signal. Reassignment typically sharpens blurry time-frequency data by relocating the data according to local estimates of instantaneous frequency and/or group delay.

It may be provided that the harmonic component analysis comprises computing a multitapered (reassigned) constant-Q transform. The term "Multitapering" may be understood in the context of audio signal processing as a technique where multiple tapering windows are applied to the signal. Multitaper reassignment may comprise taking the mean of multiple reassigned spectrograms obtained with orthogonal windows (tapers), so that the resulting representation emphasizes deterministic signal components while simultaneously reducing variance of background noise.

By computing a constant-Q transform, in particular a reassigned constant-Q transform or a multitapered constant-Q transform, more particularly a multitapered reassigned constant-Q transform during the harmonic component analysis, tracking precision and accuracy can be significantly enhanced, particularly under challenging conditions involving multicomponent signals subject to noise. Unlike, for instance, the short-time Fourier transform (STFT) which provides fixed time and frequency resolution on a linear frequency scale, the CQT offers time and frequency resolutions proportional to the center frequency of each filter and operates on a logarithmic frequency scale. The inventors have found that this makes it particularly suitable for analyzing harmonic tones. Experiments have shown that the harmonic component analysis according to aspects disclosed herein can achieve a precision of 89 %, a recall of 51 %, and a mean frequency deviation of $0.8 \pm 0.15$ kHz. Unlike existing tools such as DeepSqueak, this enables accurate tracking of harmonic components, expanding the scope of USV analysis.

It may be provided that the method also comprises performing fundamental frequency analysis to track a (the) fundamental frequency of the ultrasonic vocalization signal. The term "Fundamental frequency", often referred to simply as the "fundamental" (abbreviated as $f_0$ or $f_1$), may be understood as the lowest frequency of a periodic waveform, which in the context of audio signals, corresponds to the pitch of a sound. In the case of ultrasonic vocalizations, such as those produced by rodents, the fundamental frequency would be the lowest frequency component that characterizes the vocalization.

It may be provided that the fundamental frequency analysis comprises computing a Fourier analysis, preferably a Fourier-related transform, more preferably a short-time Fourier transform, even more preferably a reassigned short-time Fourier transform or a multitapered short-time Fourier transform, and even more preferably a multitapered reassigned short-time Fourier transform. The term "Fourier analysis" may be understood as a technique that represents or approximates a general function by sums of simpler trigonometric functions, such as by decomposing a function into oscillatory components. The term "Fourier-related transform" may be understood as a mathematical (linear) transform that maps a function to a set of coefficients of basis functions, where the basis functions are sinusoidal and are therefore strongly localized in the frequency spectrum. The term "Short-time Fourier transform" (STFT) may be understood as a Fourier-related transform that decomposes a function of time (a signal) into its constituent frequencies. The STFT determines the sinusoidal frequency and phase content of local sections of a signal as it changes over time. It is typically a sequence of localized frequency-domain representations or time-frequency-domain representations of a discrete signal derived from a finite sequence of equally-spaced samples of the signal. The STFT is particularly useful in audio signal processing for analyzing the frequency content of non-stationary signals, such as ultrasonic vocalizations of rodents in an audio signal, where the signal's frequency components vary over time. Technological background about STFT can be found in J. Allen, "Short term spectral analysis, synthesis, and modification by discrete fourier transform," IEEE transactions on acoustics, speech, and signal processing, vol. 25, no. 3, pp. 235-238, 1977., the contents of which are incorporated herein by reference.

Using a reassigned and/or multitapered approach for the fundamental frequency analysis brings about similar

benefits as were explained above in connection with the harmonic component analysis. By incorporating multitapered and/or reassigned STFT, the invention can effectively mitigate the impact of background noise and competing sounds on USV tracking performance. Experiments have shown that the fundamental frequency analysis according to aspects disclosed herein can achieve a precision of 89.6 % and a low mean frequency deviation of 1.5±5.1 kHz, outperforming existing tools such as DeepSqueak, which reaches only 80.3 % precision and exhibits a higher mean frequency deviation of 6.8±11.2 kHz.

Tracking both the fundamental frequency and one or more harmonic partials of the USV results in a more accurate detection of ultrasonic vocalizations, as it can take into account the harmonic structure of these vocalizations.

It may be provided that the harmonic component analysis further comprises computing an autocorrelation of the constant-Q transform, in. particular the multitapered reassigned constant-Q transform. The autocorrelation may be computed at each time frame. The term "Autocorrelation" may be understood as a signal processing technique that measures the similarity of a signal with a delayed version of itself as a function of delay. It may be used to identify repeating patterns or hidden periodicities within a signal obscured by noise. While traditionally used for pitch estimation in speech signals, here it is applied to the spectral representation via CQT. Specifically, the autocorrelation may be computed for each column of the CQ spectrogram, where each column corresponds to a single time frame, to identify repeating patterns in the frequency domain. Peaks in the autocorrelation function at positions corresponding to integer multiples of the fundamental frequency may be used to indicate the presence of harmonic partial components.

It may be provided that the autocorrelation is computed for each time frame of a plurality of time frames (in the received vocalization signal) and then averaged over multiple adjacent time frames. In noisy signals, background noise might introduce spurious peaks in the autocorrelation. Hence, analyzing multiple adjacent time frames, such as by computing a weighted average of them, ensures that only correlations that persist over some span of time are considered.

The autocorrelation, in particular the resulting autocorrelation after weighted averaging over adjacent time frames, may be analyzed to identify maxima in each time frame. These maxima are expected to appear near integer multiples of the fundamental frequency, indicating the presence of harmonic components.

It may be provided that the fundamental frequency analysis further comprises performing path optimization. This may involve determining an optimal path or trajectory through a time-frequency representation (e.g., spectrogram) to track specific features or patterns in the signal. As used herein, path optimization may comprise selecting high-energy frequency ridges (such as ridges above a predetermined threshold) and/or applying a penalty to discourage sudden jumps. The goal of path optimization during the fundamental frequency analysis is to find the most likely sequence of frequency and time coordinates that represents the underlying structure of the ultrasonic vocalization (USV) signal. The path optimization enables more accurate tracking of ridges and/or harmonics in the ultrasonic vocalization signal.

It may be provided that the harmonic partial which is tracked is the first harmonic partial. In general, harmonics are integer multiples of the fundamental frequency. In this case, the first harmonic partial is the second harmonic component, which has a frequency that is twice the fundamental frequency. In other words, the "first harmonic partial" refers to the second harmonic peak in the ultrasonic vocalization signal, which is an important feature for analyzing ultrasonic vocalizations.

Additionally, the method may involve denoising the ultrasonic vocalization signal. The term "Denoising" may be understood as the process of removing noise from a signal. In the context of audio signal processing, denoising refers to techniques and algorithms used to reduce or eliminate unwanted background sounds from the audio signal. Denoising the ultrasonic vocalization signal allows the ultrasonic vocalizations of interest, such as those made by rodents, to be more clearly detected and analyzed.

It may be provided that the denoising comprises applying a Wiener filter. This may involve minimizing the mean squared error between the original (noisy) signal and the filtered (denoised) signal, such as by adjusting the weights of a set of filters to minimize the difference between the two signals.

It may be provided that the denoising comprises empirical Wiener shrinkage. By applying empirical Wiener shrinkage in the short-time Fourier domain, such as by way of a diagonal approximation of an optimal Wiener filter, background noise in the ultrasonic vocalization signal can be further reduced.

It may be provided that the tracked fundamental frequency and/or the tracked (first) harmonic partial(s) are stored, displayed, and/or provided for further processing.

It may be provided that the ultrasonic vocalization signal comprises vocalizations of a subject or at least one subject, such as an animal, rodent, or specifically a mouse, such as a house mouse.

Another aspect of the present disclosure relates to a data processing apparatus. The data processing apparatus may comprise means for carrying out a method according to any one of the aspects described herein. The data processing apparatus may comprise a memory and one or more processors coupled to the memory, the one or more processors being configured to carry out a method according to any one of the aspects described herein.

Another aspect of the present invention relates to a computer program. The computer program may comprise instructions which, when the program is executed by a computer, such as the mentioned data processing apparatus, cause the computer to carry out a method according to any one of the aspects described herein. A computer program may

also be referred to as a program, software, a software application, an app, a module, a software module, a script, or code. A computer program may be written in a programming language, including compiled or interpreted languages. A computer program may be deployed in any form, including as a stand-alone product or as a module, component, subroutine, or other unit suitable for use in a computing environment, such as on the mentioned data processing apparatus.

Another aspect of the present invention relates to a computer-readable medium having stored thereon a computer program as described above.

Another aspect of the present invention relates to a non-transitory computer-readable medium storing a set of instructions that, when executed by one or more processors of an apparatus, cause the apparatus to carry out a method according to any one of the aspects described herein

These and other aspects of the invention will be apparent from and elucidated with reference to the embodiment(s) described hereinafter.

## BRIEF DESCRIPTION OF THE DRAWINGS

The present disclosure may be better understood by reference to the following drawings:

FIG. 1 illustrates a schematic overview of a processing pipeline for processing an ultrasonic vocalization signal in accordance with one embodiment.

FIG. 2 illustrates test results of a comparison of ridge estimation methods for USVs under varying SNR conditions in accordance with one embodiment.

FIG. 3 illustrates test results of partial harmonic estimation for three distinct harmonic USVs under varying precision and recall in accordance with one embodiment.

FIG. 4 illustrates a table with evaluation metrics for ridge estimation in accordance with one embodiment.

FIG. 5 illustrates a table with evaluation metrics for harmonic component estimation in accordance with one embodiment.

FIG. 6 illustrates a flowchart of a method of processing an ultrasonic vocalization signal in accordance with one embodiment.

FIG. 7 illustrates a schematic block diagram of computer hardware usable for carrying out aspects of this disclosure in accordance with one embodiment.

## DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

### Overview

Ultrasonic vocalizations (USVs) convey information about animal behavior, e.g., in mice. Certain embodiments track USV as ridges in the time-frequency domain via a variant of time-frequency reassignment (TFR). In certain embodiments, TFR is performed with empirical Wiener shrinkage and multitapering to improve robustness to noise. Furthermore, certain embodiments perform TFR over both the short-term short-time Fourier transform (STFT) and the constant-Q transform (CQT) so as to detect both the fundamental frequency and its harmonic partial(s) (if any).

Certain embodiments provide a method for multicomponent tracking of USVs. Certain embodiments involve several preprocessing and/or post-processing techniques in addition to TFR, including:

- Empirical Wiener shrinkage
- Multitapering
- CQT-based autocorrelation

One idea is to take advantage of the equivariance property in the constant-Q transform with respect to the frequency transposition of pure tones. Given an STFT-based estimate of the fundamental ridge and a reassigned CQT,

certain embodiments compute the autocorrelation over adjacent log-frequency bins in the CQT so as to detect multiple components in a way that is both data-driven and informed by prior knowledge about harmonic spectra. This constitutes the first successful application of CQT to mouse USVs, and one of the first in bioacoustics at large.

Experimental results show that certain embodiments effectively estimate multicomponent ridges and harmonic partials with high precision and low mean frequency deviation. This way, certain embodiments offer a significant improvement in the efficiency of USV analysis, particularly in noisy environments or when harmonic components are present. Notably, certain embodiments do not require hand-annotated data for parametrization.

**Time-Frequency Processing**

In the following, certain concepts from time-frequency processing used in certain embodiments are described. Specifically, certain embodiments compute two different time-frequency transforms, to be used in different processing steps: a STFT and a CQT. Whereas the STFT provides a fixed time and frequency resolution and operates on a linear frequency scale, the time respectively frequency resolution of the CQT are anti-proportional, respectively proportional, to the center frequency of each filter, due to the CQT's constant center-frequency-to-bandwidth ratio. Furthermore, CQT operates on a logarithmic frequency scale and is therefore particularly suitable for the analysis of harmonic tones.

Both transforms may be implemented using one or more respective filter banks. The coefficients associated with both filter banks can be interpreted as the scalar products of the signal $x \in \mathbb{C}^L$ of interest with a family of *time-frequency atoms.*

Specifically, the STFT is given by

$$V_g x[n,m] = \langle x, g_{n,m} \rangle, \text{ with } g_{n,m}(\bullet) = g[\bullet - na] e^{2\pi i (\bullet) m/M}, \quad (1)$$

where the hop size (or decimation factor) *a* and the FFT length *M* are divisors of *L*, *n* = 0,..., *L*/*a* - 1 and *m* = 0,...,*M* - 1, and $g \in \mathbb{C}^L$ is the Hann window function. In certain embodiments, we set *a* = 150 (samples) and the FFT length *M* = 750 equals the support length of the window g, corresponding to 2.5 ms. We further denote by $S_g x = |V_g x|^2$ the *(STFT) spectrogram* of *x*.

The CQT is constructed from bandpass filters $\psi_k \in \mathbb{C}^L$, *k* = 0,..., *K* - 1 centered at frequencies $2^{k/B}\xi_{\min}$, where *B* is the number of frequency bins (or channels) per octave covered by the CQT and $\xi_{\min}$ is the minimum frequency of interest. To ensure the desired constant center-frequency-to-bandwidth ratio, it is common to derive the $\Psi_k$ by sampling appropriate dilations of a fixed, continuous bandpass filter $\Psi$, revealing the close relation of the CQT to wavelet transforms. Here, we additionally use uniform decimation, such that the CQT is given by

$$C_\psi x[n,k] = \langle x, \psi_{n,k} \rangle, \text{ with } \psi_{n,k} = \psi_k[\bullet - na]. \quad (2)$$

Specifically, we set *a* = 150, $\xi_{\min}$ = 28 kHz, *B* = 512 and *K* = 1240 in order to cover the entire frequency range from $\xi_{\min}$ up to the Nyquist frequency of 150 kHz. Finally, we denote by $S_\psi x = |C_\psi x|^2$ the CQ *spectrogram* of *x.*

**Multitaper Reassignment**

Like for any linear filter bank, the local (joint) time-frequency resolution of the STFT and CQT is fundamentally limited by the uncertainty principle, which manifests as a smearing in the respective spectrogram that cannot be arbitrarily reduced. Spectrogram reassignment can be used to sharpen spectrograms by reallocating time-frequency energy based on its local instantaneous frequency and group delay.

Specifically, every STFT coefficient $V_g x[n, m]$ represents the time-frequency content of *x* in an area around a specific time-frequency position that we denote by $(t_n, \xi_m)$. Let $t_0[n,m]$ and $\xi_0[n, m]$ be estimates of the local group delay and instantaneous frequency for the coefficient $V_g x[n, m]$ and define

$$n_0[n,m] := \arg\min_{n \in \mathbb{Z}} |t_0[n,m] - t_n|$$

and

$$m_0[n,m] := \arg\min_{m \in \mathbb{Z}} |\xi_0[n,m] - \xi_n|.$$

Then, with $L_{n,m} = \{(l,k) \in \mathbb{Z}^2 : (n_0[l,k], m_0[l,k]) - (n,m)\}$, the *reassigned (STFT) spectrogram* is defined as

$$S_g^{(R)} x[n,m] = \sum_{(\tilde{n},\tilde{m}) \in L_{n,m}} S_g x[\tilde{n},\tilde{m}]. \quad (3)$$

The definition of the *reassigned CQ spectrogram* $S_{\Psi}^{(R)}x[n, m]$ is analogous. Although different techniques for estimating the local group delay and instantaneous frequency exist, certain embodiments use the method proposed in F. Auger and P. Flandrin, "Improving the readability of time-frequency and time-scale representations by the method of reassigment, " IEEE Trans. Signal Process., vol. 43, no. 5, pp. 1068-1089, May 1995., the content of which is incorporated herein by reference, for STFT reassignment and the generalization from N. Holighaus, Z. Prsa, and P. L. Søndergaard, "Reassignment and synchrosqueezing for general time-frequency filter banks, subsampling and processing," Signal Processing, vol. 125, pp. 1-8, 2016*., the content of which is incorporated herein by reference,* for reassignment of the CQT.

To further attenuate noise spectrograms and improve robustness, certain embodiments use multitaper spectrogram reassignment, which is normally used only for the STFT. Certain embodiments generalize it to the CQT. In certain embodiments, by taking the mean of multiple reassigned spectrograms obtained with orthogonal windows (tapers), the resulting representation emphasizes deterministic signal components while simultaneously reducing variance of background noise. In certain embodiments, a fixed number $s \in \mathbb{N}$ of windows $g^{(0)},..., g^{(s-1)}$, resp. prototype filters $\Psi^{(0)},..., \Psi^{(s-1)}$, derived from orthogonal Hermite functions, are selected as tapers. Certain embodiments use s = 6 tapers for both the STFT and CQT. The multitaper reassigned spectrograms are then given by

$$\mathcal{V}_x^{(R)}[n,m] = s^{-1} \cdot \sum_{j=0}^{s-1} S_{g^{(j)}}^{(R)} x[n,m] \quad (4)$$

and

$$\mathcal{C}_x^{(R)}[n,k] = s^{-1} \cdot \sum_{j=0}^{s-1} S_{\psi^{(j)}}^{(R)} x[n,k], \quad (5)$$

respectively.

As a final step to further refine the reassigned CQ spectrogram, certain embodiments implement a modified version of the pre-denoising step proposed in Section III-B of J. Xiao and P. Flandrin, "Multitaper time-frequency reassignment for nonstationary spectrum estimation and chirp enhancement," IEEE Transactions on Signal Processing, vol. 55, no. 6, pp. 2851-2860, 2007*.,* the content of which is incorporated herein by reference, where we substitute the binary mask by a smooth approximation.

Certain embodiments, the implementation provided in the Large Time/Frequency Analysis Toolbox (LTFAT) may be used for all calculations involving the CQT.

Data

A study of certain embodiments uses the USVs of a dataset from a previous study described in T. Klaus, B. Wernisch, S. M. Zala, and D. J. Penn, "Courtship vocalisations of wild house mice show highly dynamic changes and correlate with male copulatory success," Animal Behaviour, 2024, in press*.,* the content of which is incorporated herein by reference. These USVs were recorded from adult wildcaught house mice (*Mus musculus musculus*) using RECORDER USGH software (Avisoft-RECORDER Version 4.2) at a sampling rate of 300 kHz. The USVs analyzed in this study range from 30 kHz to 120 kHz, with durations between approximately 3 ms and 200 ms. The USVs were classified by human biologists experienced with this task into 9 distinct categories based on various acoustic features, which are "upward" (UP), "down" (D), "C2" for 2-component USVs, "C3" for 3-component USVs, "complex" (C), U-shaped and inverted U-shaped signals labeled as "U" and "UI", "flat" (F), and harmonic USVs were denoted as "H". For that, spectrograms as visual information, and automatic detection of USVs were used.

To evaluate the ridge detection method of certain embodiments disclosed herein, hand-annotated ridges were used. These annotations were prepared by initially estimating ridges for 197 USVs using the method of certain embodiments. These samples included a range of low- and high-SNR cases. The initial estimates were then manually

refined post-hoc using a custom Python GUI.

## USV processing pipeline

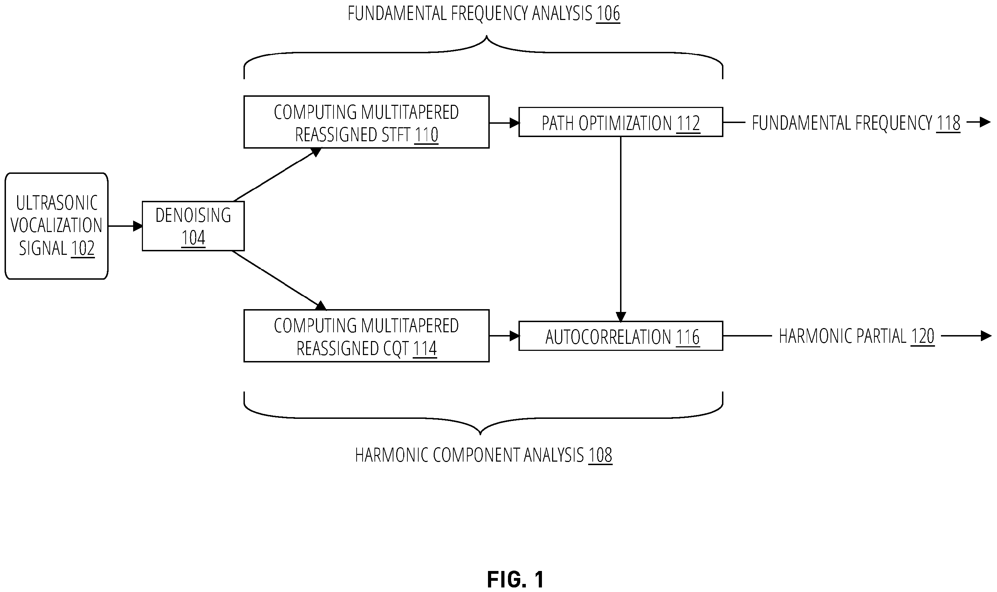

FIG. 1 illustrates a processing pipeline for processing an ultrasonic vocalization signal in accordance with one embodiment to estimate or compute the fundamental frequency 118 ($\xi_0$) and the first harmonic partial 120 of USVs in an ultrasonic vocalization signal 102. In alternative embodiments, only the fundamental frequency 118, only the first harmonic partial 120, only a set of harmonic partials 120, or any combination thereof may be computed, as required by the individual case. As illustrated in FIG. 1, the approach begins by denoising 104 the ultrasonic vocalization signal 102, e.g., by using a Wiener filter. Denoising is optional in alternative embodiments. During fundamental frequency analysis 106, one or more multitapered reassigned short-time Fourier transforms (STFTs) 110, e.g., multitapered reassigned spectrogram(s), are computed to identify the ridge, through path optimization 112. During harmonic component analysis 108, one or more multitapered reassigned constant-Q transforms 114 (CQTs) are computed to extract the partial harmonic component using autocorrelation 116 analysis.

In the following, each of these processing components will be described in more detail:

## Denoising 104

In certain embodiments, to reduce background noise in the ultrasonic vocalization signal 102, empirical Wiener shrinkage is applied in the short-time Fourier domain, such as a diagonal approximation of an optimal Wiener filter. In one embodiment, an estimate of the power spectral density of the stationary background noise is obtained from the spectrogram of a 2-second recording without the presence of USVs.

## Fundamental frequency analysis 106 for ridge estimation

In certain embodiments, the frequency ridge associated with the fundamental frequency 118 $\xi_0$ is determined using the standard algorithm implemented in the MATLAB function tfridge. It determines a ridge from the reassigned spectrogram $\mathcal{V}_x^{(R)}$ as follows. Define the matrix $\mathcal{L}[n, m]$ recursively by $\mathcal{L}[0, m] = -\ln \mathcal{V}_x^{(R)}[0, m]$ and, for $n \geq 1$, set

$$\mathcal{L}[n, m] = -\ln \mathcal{V}_x^{(R)}[n, m] + \left( \min_{\tilde{m}=0}^{M-1} L[n-1, \tilde{m}] + \alpha \cdot |m - \tilde{m}|^2 \right).$$

Here, the parameter $\alpha > 0$ controls how strictly frequency jumps are penalized. Further, define $\mathcal{M}[n, m]$ by $\mathcal{M}[0, m] = 0$ and, *for* $n \geq 1$,

$$\mathcal{M}[n, m] = \arg \min_{\tilde{m}=0}^{M-1} L[n-1, \tilde{m}] + \alpha \cdot |m - \tilde{m}|^2 .$$

A ridge $m_0, \ldots, m_{N-1}$), where $N - 1 := L/a - 1$ is the time index of the final time frame, is then recursively selected by setting $m_{N-1} = \arg \min_{\tilde{m}=0}^{M-1} L[N-1, \tilde{m}]$ and $m_n = M[n+1, m_{n+1}]$ for $n = 0, \ldots, N-2$.

In certain embodiments, the penalty parameter $\alpha$ is determined heuristically as $\alpha = 6 \times 10^{-4}$, which yielded satisfactory results for all USVs in the used data set. After detecting ridges, they were refined by setting a threshold of 10 on the distance between frequency bins. If the distance between adjacent ridge points exceeded this threshold, those points were replaced with NaN values. Subsequently, for those missing values, a linear function was applied to smooth the detected ridges.

## Harmonic component analysis 108

In certain embodiments, the detection and estimation of harmonic components relies on the observation that, due to its logarithmic frequency scale, the CQT is equivariant under transposition. Specifically, if we consider a USV with time-dependent fundamental frequency 118 $\xi_0[n]$ and harmonic partials 120 at $\xi_j[n] = c_j \xi_0[n]$, $j = 1, \ldots, J$, then the multiplication property of the logarithm yields $\log_2(c_j \xi_0[n]) = \log_2(\xi_0[n]) + \log_2(c_j)$. As a consequence, the distance between harmonic partials 120 in the CQ spectrogram (and its reassigned variants) does not depend on the fundamental frequency 118 $\xi_0[n]$. Furthermore, harmonic partials 120 are typically expected close to integer multiples of the fundamental frequency 118, i.e., $c_j \approx j + 1$, such that, e.g., the first partial (if present) is expected to be roughly one octave higher, yielding a ridge at a distance

of ≈ $B$ bins to the ridge associated with the fundamental.

In certain embodiments, autocorrelation analysis 116 is used to detect repeating patterns in the data, e.g., such as sone in other contexts like for pitch estimation in speech signals. In certain embodiments, it is applied to determine presence of partials in the n-th CQT time frame: For a clean signal, certain embodiments only involve computing the autocorrelation 116 of the column vector $C_x^{(R)}[n,\bullet]$ and finding maxima in the vicinity of integer multiples of the fundamental frequency 118. In noisy signals, this process may be unstable, since the background noise might introduce spurious peaks in the autocorrelation 116. Hence, a weighted average over adjacent time frames may be used to ensure that only correlations that persist over some span of time are considered. If $R_n := R(C_x^{(R)}[n,\bullet])$ denotes the autocorrelation 116 of $C_x^{(R)}[n,\bullet]$, then partials can be detected via the features

$$\mathbf{R}_n = C^{-1} \sum_{j=-J}^{J} c_{|j|} R_{n+j},$$

where $c_0 = 1$, $0 \leq c_j \leq 1$ and $C = 1 + 2\sum_{j=1}^{J} c_j$. In certain embodiments, only the simplest case $J = 1$ and $c_0 = c_1 = 1$ is considered. Furthermore, since the sampling rate of USV recordings may not be high enough to resolve higher order partials, the search may be restricted to the first partial, as in the illustrated embodiment.

In certain embodiments, a candidate bin for the first partial is determined from the autocorrelation vector $\mathrm{R}_n$ as follows: Set $\mathrm{R}_n[k] = 0$ for $k = 0,..., 60, K - 60,..., K - 1$ and determine $k_1$ as $\arg\max_{k=0}^{K-1} \mathrm{R}_n[k]$. If the center frequency $\tilde{\xi} = 2^{k_1/B}\xi_{\min}$ associated with the bin $k_1$ is approximately $2\xi_0[n]$, then we consider $\tilde{\xi}$ a candidate for $\xi_1[n]$. If a maximum deviation of a predetermined threshold, such as 3 kHz, is exceeded, we set $\xi_1[n] = NaN$. After performing the above steps for all time frames $n$, we retain only sequences of a predetermined number, such as 5, or more consecutive non-*NaN* values to represent the ridge of the first harmonic partial 120.

**Experiments and test results**

In one embodiment, the performance of the proposed method was compared with the USV ridge estimation tool in DeepSqueak, as well as providing the same method with a reassigned spectrogram. Since DeepSqueak does not provide harmonic estimation, metrics are reported for harmonic components only. The estimated fundamental frequency 118 $\xi_0$ and harmonic partial 120 $\xi_1$ (if present) for each USV were compared to hand-annotated data. The performance of the proposed method was evaluated in terms of precision and mean frequency deviation. An estimated ridge was considered a match (true positive) to a manually annotated ridge if the mean difference between the estimated ridge point and the ground truth ridge point did not exceed 500 Hz, and a false positive otherwise. For the harmonic component, the same rule applies; however, the threshold for qualifying as true positive was set to 3 kHz. Additionally, false positives may occur if the manual annotations indicate the absence of the first partial and false negatives if a partial is present, but not detected. Hence, we additionally report recall values for harmonic detection.

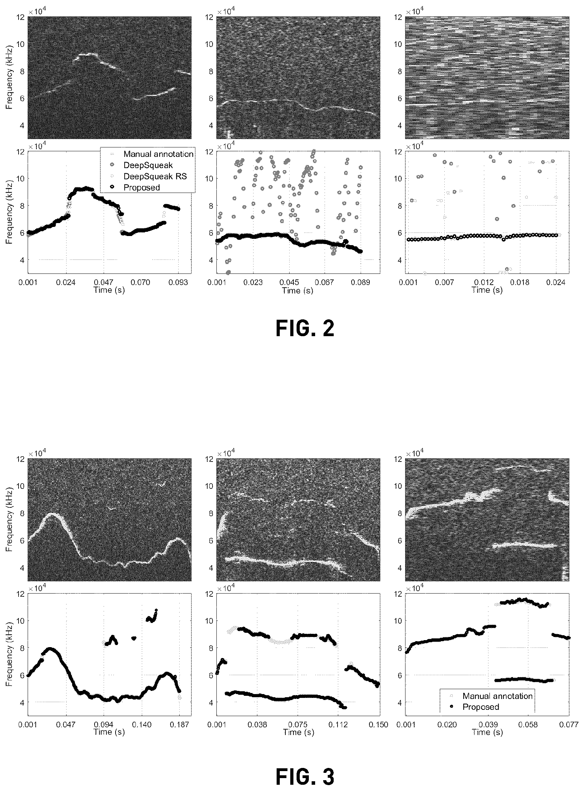

FIG. 2 shows a comparison of the ridge estimation methods for USV under varying SNR conditions. The proposed method of certain embodiments consistently outperforms the DeepSqueak and DeepSqueak RS approaches across all SNR conditions. In contrast, DeepSqueak has difficulties to accurately estimate ridges, when the SNR decreases. Incorporating a reassigned spectrogram (DeepSqueak RS) enhances its performance, demonstrating the benefits of this technique for ridge estimation in noisy environments. Despite these improvements, in extremely low-SNR scenarios (third column), only the proposed method effectively estimates the ridges correctly.

FIG. 3 shows performance of the harmonic partial estimation method for USV under varying precision and recall. The first column displays a USV with moderate precision (62%, primarily due to high false positives) and high recall (81%). In the second column, the spectrogram shows a USV with high precision (97%) but lower recall (63%) as a result of high false negatives. The third column shows a USV with both high precision (100%) and high recall (86%).

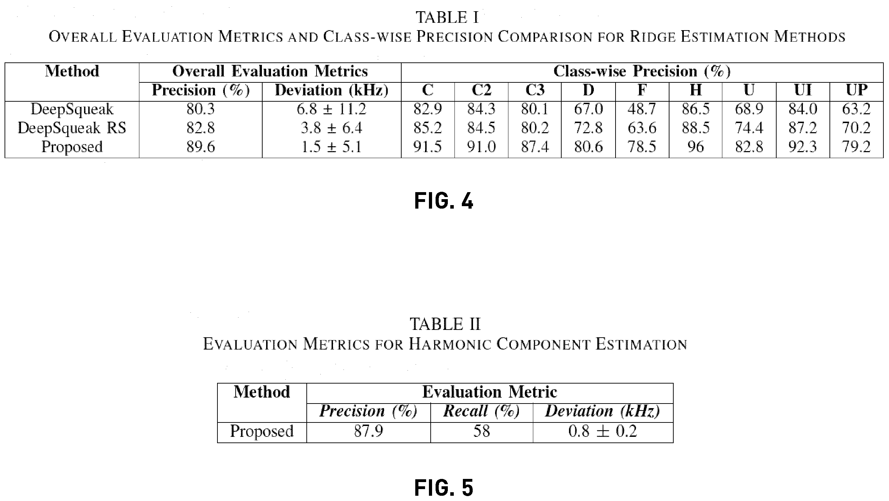

As shown in Table I in FIG. 4, the method of an embodiment achieved the highest precision (89.6%), significantly outperforming both DeepSqueak (80.3%) and DeepSqueak RS (82.8%). Regarding mean frequency deviation, again the proposed method shows superior performance, with a deviation of 1.5 ± 5.1 kHz, which is notably lower than both DeepSqueak (6.8 ± 11.2 kHz) and DeepSqueak RS (3.8 ± 6.4 kHz). This indicates that the method of the evaluated embodiment is more accurate in correctly estimating ridge points.

Examining the class-wise precision in Table I, the tested method shows substantial improvements across all classes compared to DeepSqueak. We note particularly large improvements in classes D, F, and U and UP, on which the DeepSqueak baseline performed poorly. This indicates that in our data, USV recordings associated with these classes have a lower average SNR, providing a further indication that the method of certain embodiments is more robust to noise

than the baseline.

The results for first harmonic partial component estimation, shown in Table II in FIG. 5, indicate that the proposed method has a precision - correctness if detected - of 87.6%. The recall is 58%, reflecting the proportion of actual harmonics that were successfully detected. The mean frequency deviation is $0.8 \pm 0.2$ kHz, showing the average error in frequency estimation. This is significantly less than that obtained in estimating the fundamental frequency.

**Method**

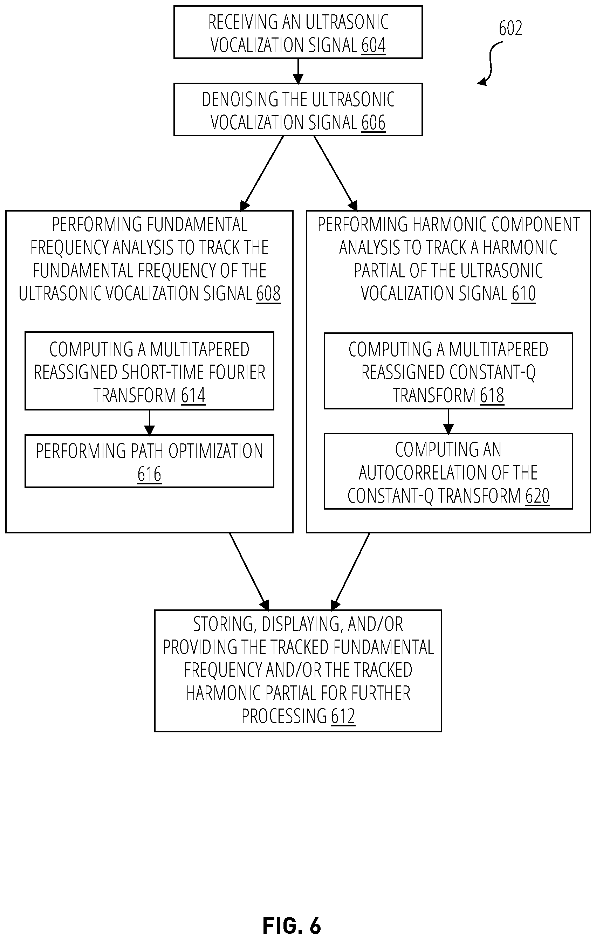

FIG. 6 illustrates one embodiment of a method of processing an ultrasonic vocalization signal 602. The method includes receiving an ultrasonic vocalization signal 604. The method involves denoising the ultrasonic vocalization signal 606, which is optional in other embodiments. The method involves performing fundamental frequency analysis to track the fundamental frequency of the ultrasonic vocalization signal 608 and performing harmonic component analysis to track a harmonic partial of the ultrasonic vocalization signal 610. Alternative embodiments may perform only one of these. In the illustrated embodiment, performing fundamental frequency analysis to track the fundamental frequency of the ultrasonic vocalization signal 608 involves computing a multitapered reassigned short-time Fourier transform 614 and performing path optimization 616. In the illustrated embodiment, performing harmonic component analysis to track a harmonic partial of the ultrasonic vocalization signal 610 involves computing a multitapered reassigned constant-Q transform 618 and computing an autocorrelation of the constant-Q transform 620. The method in the illustrated embodiment further involves storing, displaying, and/or providing the tracked fundamental frequency and/or the tracked harmonic partial for further processing 612.

**Hardware implementation**

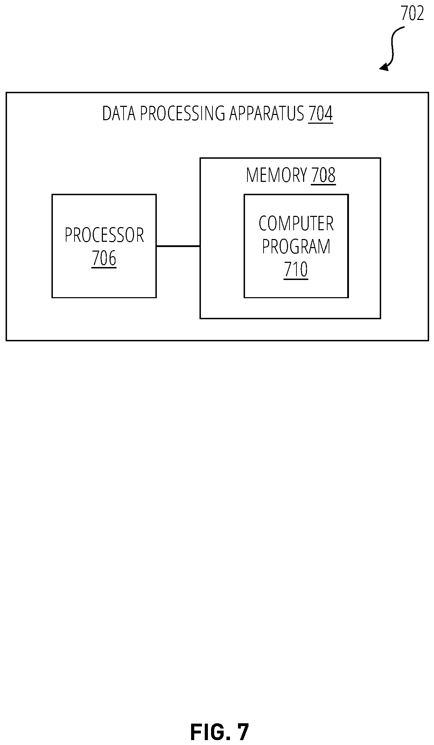

FIG. 7 illustrates a schematic block diagram of computer hardware usable for carrying out one or more aspects disclosed herein. As can be seen, a system 702 comprises a data processing apparatus 704. The data processing apparatus 704 comprises one or more processors, one of which is exemplarily shown as processor 706. The data processing apparatus 704 comprises a memory 708. The one or more processors 706 are communicatively coupled to the memory 708. The memory 708 comprises a computer program 710. The computer program 710 may implement some or all aspects of the disclosed methods and functionalities.

**Conclusion**

Ultrasonic vocalizations (USVs) provide valuable insights into animal communication and their classification enhances our understanding of rodent behavior. The latter is based on time-frequency ridges detected in the USVs, the estimation of which is challenging, especially at realistic signal-to-noise ratios (SNR). In certain embodiments disclosed herein, a new method based on time-frequency processing of USV audio signals is proposed which significantly improves precision and mean frequency deviation for detecting the fundamental frequency $\xi_0$ and, furthermore, detects the presence of a first harmonic partial $\xi_1$ with high precision and low frequency deviation. Harmonic USVs present a particular challenge for automatic classification, especially during sexual and social interactions when high levels of background noise and competing sounds, such as female broadband vocalizations, are present. In contrast to prior methods, which usually neglected partial harmonic frequencies entirely, our method facilitates the correct classification of USVs of harmonic type.

Certain embodiments have been disclosed which advantageously combine advanced time-frequency processing, including time-frequency reassignment (TFR), with empirical Wiener shrinkage, multitapering, and CQT-based autocorrelation. One aspect relates to the use of multitaper wavelet/COT reassignment, which has not been previously reported for USV analysis or other applications. This method leverages the equivariance property of the CQT for frequency transposition of pure tones. Using an STFT-based eatimate of the fundamental ridge and a reassigned CQT, we compute the autocorrelation across adjacent log-frequency bins to detect multiple components, integrating data-driven analysis with harmonic spectrum knowledge. This represents the first successful application of CQT to mouse USVs and one of the earliest in bioacoustics.

Certain embodiments provide a novel method for accurately tracking ultrasonic vocalizations (USVs) of house mice, based on advanced time-frequency processing techniques. By combining Multitaper Time-Frequency Reassignment (TFR) and Constant-Q Transform (CQT) with techniques such as autocorrelation and Wiener shrinkage, the method optimizes multicomponent tracking. This approach overcomes the limitations of traditional USV tracking methods, particularly in terms of noise sensitivity and multicomponent signals.

While the invention has been illustrated and described in detail in the drawings and foregoing description, such illustration and description is to be considered illustrative or exemplary and not restrictive. The invention is not limited to the disclosed embodiments. Variations to the disclosed embodiments can be understood and effected by those skilled in the

art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system. Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer-readable.

Generally, embodiments of the present disclosure can be implemented as a computer program product with a program code, the program code being operative for performing one of the methods when the computer program product runs on a computer. The program code may, for example, be stored on a machine-readable carrier. Other embodiments comprise a computer program for performing one of the methods described herein, e.g., stored on a machine-readable carrier. A further embodiment is a computer program having a program code for performing one of the methods described herein, when the computer program runs on a computer.

A further embodiment is a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory.

A further embodiment is an apparatus as described herein comprising a processor and storage medium.

A further embodiment is a data stream or a sequence of signals representing the computer program for performing one of the methods described herein. The data stream or the sequence of signals may, for example, be configured to be transferred via a data communication connection, for example, via the internet.

A further embodiment is a processing means, for example, a computer or a programmable logic device, configured to, or adapted to, perform one of the methods described herein.

A further embodiment is a computer having installed thereon the computer program for performing one of the methods described herein.

A further embodiment is an apparatus or a system configured to transfer (e.g., electronically or optically) a computer program for performing one of the methods described herein to a receiver. The receiver may, for example, comprise a computer, a mobile device, a Memory device or the like. The apparatus or system may, for example, comprise a file server for transferring the computer program to the receiver.

This work was supported by the FWF (Austrian Science Fund) projects P36446 (R. Abbasi, S. Zala), P34922-N (P. Balazs), P28141-B25 (D. Penn), the WWTF project LS23-014 (N. Holighaus) and the ANR project ANR-23-CE37-0025 (V. Lostanlen).

## REFERENCE SIGNS

102 ultrasonic vocalization signal
104 denoising
106 fundamental frequency analysis
108 harmonic component analysis
110 computing multitapered reassigned short-time Fourier transform
112 path optimization
114 computing multitapered reassigned CQT
116 autocorrelation
118 fundamental frequency
120 harmonic partial
602 method of processing an ultrasonic vocalization signal
604 receiving an ultrasonic vocalization signal
606 denoising the ultrasonic vocalization signal
608 performing fundamental frequency analysis
610 performing harmonic component analysis
612 storing, displaying, and/or providing the tracked fundamental frequency and/or the tracked harmonic partial for further processing
614 computing a multitapered reassigned short-time Fourier transform
616 performing path optimization
618 computing a multitapered reassigned constant-Q transform
620 computing an autocorrelation of the constant-Q transform
702 system
704 data processing apparatus
706 processor
708 memory
710 computer program

## Claims

**1.** A method of processing a vocalization signal (102), in particular an ultrasonic vocalization signal (102), comprising:

receiving a vocalization signal (102), in particular an ultrasonic vocalization signal (102); and
performing harmonic component analysis (108) to track a harmonic partial (120) of the vocalization signal (102), wherein the harmonic component analysis (108) comprises:
computing a multitapered reassigned constant-Q transform (110).

**2.** The method of claim 1, further comprising:
performing fundamental frequency analysis (106) to track the fundamental frequency (118) of the vocalization signal (102).

**3.** The method of claim 1 or 2, wherein the harmonic component analysis (108) further comprises:
computing an autocorrelation (116) of the constant-Q transform.

**4.** The method of claim 3, wherein the autocorrelation (116) is computed for each of a plurality of time frames and then averaged over multiple adjacent time frames.

**5.** The method of claim 4, wherein the autocorrelation (116) is analyzed to identify one or more maxima in each time frame.

**6.** The method of any one of claims 2 to 5, wherein the fundamental frequency analysis (106) comprises:
computing a Fourier analysis, preferably a Fourier-related transform, more preferably a short-time Fourier transform, even more preferably a reassigned short-time Fourier transform, even more preferably a multitapered reassigned short-time Fourier transform (114).

**7.** The method of any one of claims 2 to 6, wherein the fundamental frequency analysis (106) further comprises: performing path optimization (112).

**8.** The method of any one of claims 1 to 7, wherein the harmonic partial (120) which is tracked is the first harmonic partial.

**9.** The method of any one of claims 1 to 8, further comprising: denoising (104) the vocalization signal (102).

**10.** The method of claim 9, wherein the denoising (104) comprises: applying a Wiener filter.

**11.** The method of claim 9 or 10, wherein the denoising (104) comprises: applying empirical Wiener shrinkage.

**12.** The method of any one of claims 1 to 11, further comprising:

storing the tracked fundamental frequency (118) and/or the tracked harmonic partial (120); and/or
displaying the tracked fundamental frequency (118) and/or the tracked harmonic partial (120); and/or
providing the tracked fundamental frequency (118) and/or the tracked harmonic partial (120) for further processing.

**13.** The method of any one of claims 1 to 12, wherein the vocalization signal (102) comprises one or more vocalizations of at least one subject, in particular an animal, more particularly a rodent, even more particularly a mouse, even more particularly a house mouse.

**14.** A computer program, or a computer-readable medium comprising a computer program, the computer program comprising instructions which, when the program is executed by a computer, cause the computer to carry out the method any one of claims 1 to 13.

**15.** A data processing apparatus comprising means for carrying out the method of any one of claims 1 to 13.

ULTRASONIC VOCALIZATION SIGNAL 102
DENOISING 104
FUNDAMENTAL FREQUENCY ANALYSIS 106
COMPUTING MULTITAPERED REASSIGNED STFT 110
PATH OPTIMIZATION 112
FUNDAMENTAL FREQUENCY 118
HARMONIC COMPONENT ANALYSIS 108
COMPUTING MULTITAPERED REASSIGNED CQT 114
AUTOCORRELATION 116
HARMONIC PARTIAL 120


FIG. 1

Frequency (kHz)
Time (s)
Manual annotation
DeepSqueak
DeepSqueak RS
Proposed

**FIG. 2**

Frequency (kHz)
Time (s)
Manual annotation
Proposed

**FIG. 3**

TABLE I

OVERALL EVALUATION METRICS AND CLASS-WISE PRECISION COMPARISON FOR RIDGE ESTIMATION METHODS

| Method | Overall Evaluation Metrics | | Class-wise Precision (%) | | | | | | | | |
|---|---|---|---|---|---|---|---|---|---|---|---|
| | Precision (%) | Deviation (kHz) | C | C2 | C3 | D | F | H | U | UI | UP |
| DeepSqueak | 80.3 | 6.8 ± 11.2 | 82.9 | 84.3 | 80.1 | 67.0 | 48.7 | 86.5 | 68.9 | 84.0 | 63.2 |
| DeepSqueak RS | 82.8 | 3.8 ± 6.4 | 85.2 | 84.5 | 80.2 | 72.8 | 63.6 | 88.5 | 74.4 | 87.2 | 70.2 |
| Proposed | 89.6 | 1.5 ± 5.1 | 91.5 | 91.0 | 87.4 | 80.6 | 78.5 | 96 | 82.8 | 92.3 | 79.2 |

FIG. 4

TABLE II

EVALUATION METRICS FOR HARMONIC COMPONENT ESTIMATION

| Method | Evaluation Metric | | |
|---|---|---|---|
| | *Precision (%)* | *Recall (%)* | *Deviation (kHz)* |
| Proposed | 87.9 | 58 | 0.8 ± 0.2 |

FIG. 5

RECEIVING AN ULTRASONIC VOCALIZATION SIGNAL 604
602
DENOISING THE ULTRASONIC VOCALIZATION SIGNAL 606
PERFORMING FUNDAMENTAL FREQUENCY ANALYSIS TO TRACK THE FUNDAMENTAL FREQUENCY OF THE ULTRASONIC VOCALIZATION SIGNAL 608
COMPUTING A MULTITAPERED REASSIGNED SHORT-TIME FOURIER TRANSFORM 614
PERFORMING PATH OPTIMIZATION 616
PERFORMING HARMONIC COMPONENT ANALYSIS TO TRACK A HARMONIC PARTIAL OF THE ULTRASONIC VOCALIZATION SIGNAL 610
COMPUTING A MULTITAPERED REASSIGNED CONSTANT-Q TRANSFORM 618
COMPUTING AN AUTOCORRELATION OF THE CONSTANT-Q TRANSFORM 620
STORING, DISPLAYING, AND/OR PROVIDING THE TRACKED FUNDAMENTAL FREQUENCY AND/OR THE TRACKED HARMONIC PARTIAL FOR FURTHER PROCESSING 612

**FIG. 6**

702
DATA PROCESSING APPARATUS 704
MEMORY 708
PROCESSOR 706
COMPUTER PROGRAM 710

FIG. 7

Europäisches Patentamt
European Patent Office
Office européen des brevets

# EUROPEAN SEARCH REPORT

Application Number
EP 25 16 2098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PESSOA DIOGO ET AL: "Automatic segmentation and classification of mice ultrasonic vocalizations", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 152, no. 1, 7 July 2022 (2022-07-07), pages 266-280, XP012266926, ISSN: 0001-4966, DOI: 10.1121/10.0012350 [retrieved on 2022-07-07] * the whole document * ----- | 1-15 | INV. G10L25/03 ADD. G10L25/48 G10L25/90 G10L17/26 |
| A | BARKER DAVID J ET AL: "Automated acoustic analysis of 50-kHz ultrasonic vocalizations using template matching and contour analysis", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 141, no. 3, 16 March 2017 (2017-03-16), pages EL281-EL286, XP012217193, ISSN: 0001-4966, DOI: 10.1121/1.4977990 [retrieved on 2017-03-16] * the whole document * ----- | 1-15 | TECHNICAL FIELDS SEARCHED (IPC) G10L |
| A | DIAN HANDY PERMANA SILVESTER ET AL: "Implementation of Constant-Q Transform (CQT) and Mel Spectrogram to converting Bird's Sound", 2021 IEEE INTERNATIONAL CONFERENCE ON COMMUNICATION, NETWORKS AND SATELLITE (COMNETSAT), IEEE, 17 July 2021 (2021-07-17), pages 52-56, XP033970397, DOI: 10.1109/COMNETSAT53002.2021.9530779 [retrieved on 2021-09-07] * the whole document * ----- -/-- | 1-15 | |

The present search report has been drawn up for all claims

1

| Place of search | Date of completion of the search | Examiner |
|---|---|---|
| The Hague | 17 July 2025 | Burchett, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

page 1 of 3

Europäisches Patentamt
European Patent Office
Office européen des brevets

# EUROPEAN SEARCH REPORT

Application Number
EP 25 16 2098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FENET SÉBASTIEN ET AL: "Reassigned time-frequency representations of discrete time signals and application to the Constant-Q Transform", SIGNAL PROCESSING, vol. 132, 14 October 2016 (2016-10-14), pages 170-176, XP029809675, ISSN: 0165-1684, DOI: 10.1016/J.SIGPRO.2016.10.008 * the whole document * ----- | 1-15 | |
| A | GFELLER BEAT ET AL: "SPICE: Self-Supervised Pitch Estimation", ARXIV:1806.04885V2,, vol. 28, 20 March 2020 (2020-03-20), pages 1118-1128, XP011785279, DOI: 10.1109/TASLP.2020.2982285 [retrieved on 2020-04-21] * the whole document * ----- | 1-15 | |
| A | DAN STOWELL: "Computational bioacoustics with deep learning: a review and roadmap", ARXIV.ORG, CORNELL UNIVERSITY LIBRARY, 201 OLIN LIBRARY CORNELL UNIVERSITY ITHACA, NY 14853, 13 December 2021 (2021-12-13), XP091121800, * the whole document * ----- -/-- | 1-15 | TECHNICAL FIELDS SEARCHED (IPC) |

The present search report has been drawn up for all claims

1

| Place of search | Date of completion of the search | Examiner |
|---|---|---|
| The Hague | 17 July 2025 | Burchett, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 16 2098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | ABBASI REYHANEH ET AL: "Robust Multicomponent Tracking of Ultrasonic Vocalizations", ICASSP 2025 - 2025 IEEE INTERNATIONAL CONFERENCE ON ACOUSTICS, SPEECH AND SIGNAL PROCESSING, 7 March 2025 (2025-03-07), XP093296152, Hyderabad, India DOI: 10.1109/ICASSP49660.2025.10890025 Retrieved from the Internet: URL:https://ieeexplore.ieee.org/abstract/document/10890025?casa_token=TJda_H42wH8AAAAA:9O4kPHD-KFOkM42C1WlaUpgcwCxnVcKJToyEk4Fp5gqjHRlqIGQjYU9fOe5h3mznBiUKbSg> ----- | 1-15 | |

TECHNICAL FIELDS SEARCHED (IPC)

The present search report has been drawn up for all claims

1

| Place of search | Date of completion of the search | Examiner |
|---|---|---|
| The Hague | 17 July 2025 | Burchett, Stefanie |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

page 3 of 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **J. C. BROWN**. Calculation of a constant q spectral transform,. *The Journal of the Acoustical Society of America*, 1991, vol. 89 (1), 425-434
- **J. ALLEN**. Short term spectral analysis, synthesis, and modification by discrete fourier transform. *IEEE transactions on acoustics, speech, and signal processing,*, 1977, vol. 25 (3), 235-238
- **F. AUGER** ; **P. FLANDRIN**. Improving the readability of time-frequency and time-scale representations by the method of re-assigment. *IEEE Trans. Signal Process.*, May 1995, vol. 43 (5), 1068-1089
- **N. HOLIGHAUS** ; **Z. PRSA** ; **P. L. SØNDERGAARD**. Reassignment and synchrosqueezing for general time-frequency filter banks, subsampling and processing. *Signal Processing*, 2016, vol. 125, 1-8
- **J. XIAO** ; **P. FLANDRIN**. Multitaper time-frequency reassignment for nonstationary spectrum estimation and chirp enhancement. *IEEE Transactions on Signal Processing*, 2007, vol. 55 (6), 2851-2860
- **T. KLAUS** ; **B. WERNISCH,** ; **S. M. ZALA** ; **D. J. PENN**. Courtship vocalisations of wild house mice show highly dynamic changes and correlate with male copulatory success. *Animal Behaviour*, 2024